# EUROPÄISCHE PATENTSCHRIFT

(11) **EP 4 555 608 B1**
(45) Veröffentlichungstag und Bekanntmachung des Hinweises auf die Patenterteilung: **15.04.2026**
(21) Anmeldenummer: 23742195.3
(22) Anmeldetag: 06.07.2023
(51) Int. Cl.: H02K 15/00, H02K 15/04

(54) **VERFAHREN ZUR HERSTELLUNG EINER WELLENWICKLUNG MIT ABISOLIERTEN DRAHTENDEN**
METHOD FOR PRODUCING A WAVE WINDING WITH STRIPPED WIRE ENDS
PROCÉDÉ DE FABRICATION D'UN ENROULEMENT ONDULÉ DOTÉ D'EXTRÉMITÉS DE FIL DÉNUDÉES

(30) Priorität: 12.07.2022 DE 102022117276
(43) Veröffentlichungstag der Anmeldung: 21.05.2025
(73) Patentinhaber: Schaeffler Technologies AG & Co. KG, 91074 Herzogenaurach (DE)
(72) Erfinder: MUELLER, Patrick, 91056 Erlangen (DE); VOGEL, Benjamin, 90559 Burgthann (DE); KNOPP, Dominik, 60435 Frankfurt (DE)
(74) Vertreter: Schaeffler Technologies
(86) Internationale Anmeldenummer: PCT/DE2023/100512
(87) Internationale Veröffentlichungsnummer: WO 2024/012630

(56) Entgegenhaltungen:
- EP-B1- 3 906 607
- DE-A1- 102014 003 602
- DE-A1- 102020 130 647
- DE-A1- 102020 212 087
- US-A1- 2008 098 598
- US-A1- 2019 280 577
- US-A1- 2020 343 795
- ANONYMOUS: "Manufacturing electric motors: Stripping and welding hairpins using a laser", WHITE PAPER, 1 January 2019 (2019-01-01), pages 1 - 10, XP055884091

## Beschreibung

Die Erfindung betrifft ein Verfahren zur Herstellung einer Wellenwicklung mit abisolierten Drahtenden.

Zur Herstellung von Rotoren oder Statoren mit einem hohen Wirkungsgrad sind bereits eine Vielzahl von Verfahren entwickelt worden, die sich primär mit dem Erzeugen von durchgängigen Spulenwicklungen befassen. Die Spulenwicklungen werden als flache Wickelmatten hergestellt und anschließend in Nuten von Statoren oder Rotoren eingezogen. Die Spulenwicklungen bestehen aus einer Anzahl miteinander verflochtener Drähte, die mehrfach gegenläufig umgebogen werden, so dass parallel zueinander liegende Schenkel bzw. gerade Abschnitte der Drähte, die zum Ausfüllen der Nuten bestimmt sind, durch dachartige Wicklungsköpfe verbunden sind, die stirnseitig über die Rotoren oder Statoren überstehen. Zur Herstellung der Spulenwicklung als zunächst flache Wickelmatte können eine flache und drehbare Wickelschablone sowie eine Drahthandhabungsvorrichtung zum Einsatz kommen. Eine so hergestellte Wickelmatte wird auch Wellenwicklung genannt. DE 10 2015 120 661 A1 beschreibt ein Verfahren zur Herstellung einer solchen Wellenwicklung. Eine Wellenwicklung zeichnet sich dadurch aus, dass die offenen Drahtenden der jeweilig zur Wellenwicklung geformten Einzeldrähte entweder an beiden Enden der Wellenwicklung oder an einem Ende der Wellenwicklung angeordnet sind. Die DE 10 2020 130647 A1 zeigt beispielsweise eine Anordnung, bei der die Drahtenden der Wellenwicklung dann auch bereits abisoliert sind.

Die Wellenwicklung wird von der Wickelschablone mittels einer Transfervorrichtung in einen Rotor- oder Statorkörper überführt. DE 10 2015 120 963 A1 zeigt eine Transfervorrichtung nach dem Stand der Technik. Die Transfervorrichtung weist eine umlaufende Gliederkette auf, die über Umlenkrollen umgelenkt und linear aufgespannt ist, so dass in einem Bereich zwischen der Wickelschablone und einer Übergabestelle an ein Übertragungswerkzeug die Wicklung abgeflacht und ohne Biegung transportiert werden kann.

Nach einer anderen Variante wird zur Überführung der Wellenwicklung vom Wickelschwert zum Einziehwerkzeug ein Linearmagazin verwendet, in das die komplette Wickelmatte überführt wird und zum Einsetzen in das Einziehwerkezug wieder entnommen wird.

Um den elektrischen Fluss in einer Spule eines Elektromotors zu ermöglichen, müssen verschiedene Drahtenden miteinander verbunden werden, um den elektrischen Fluss für unterschiedliche Phasen zu ermöglichen. Die zur Herstellung der Wellenwicklung verwendeten Drähte weisen eine isolierende Schutzschicht auf, welche vor dem Kontaktieren entfernt werden muss. US 2015 336 214 A und US 2019 326 801 A zeigen, dass das Abisolieren der Drahtenden im eingezogenen Zustand im Stator erfolgt. Das Abisolieren im eingezogenen Zustand verursacht unerwünschte Verunreinigungen am Stator, welche schwer zu kontrollieren sind. Um das zu vermeiden kann eine Maskierung vorgesehen werden, welche sehr aufwendig und ggf. kostenintensiv ist. Außerdem kann sich durch den zusätzlichen Arbeitsschritt, welcher gegebenenfalls ein manuelles Handling erfordert, zusätzlich die Taktzeit in der Herstellung verlängern. Außerdem ist die Zugänglichkeit der Drahtenden möglicherweise stark eingeschränkt, etwa durch sich überlappende Schichten auf Statorinnen- und außendurchmesser, was sowohl für den Abisolierprozess als auch Spann- und Greiftechnik hinderlich ist.

Alternativ kann vorgesehen sein, dass das Abisolieren bereits vor Einzug der Wicklung an frei liegenden Einzeldrähten erfolgt. US 2013 031 779 A zeigt ein Abisolieren vor dem Ablängen des Einzeldrahtes und US 2019 280 574 A zeigt ein Abisolieren nach dem Ablängen des Einzeldrahtes. Das Abisolieren der Einzeldrähte hat zur Folge, dass die Isolation zu einem recht frühen Zeitpunkt in der Prozesskette bis zur Kontaktierung der Drahtenden erfolgt. Durch Toleranzen in der Spulenherstellung ergeben sich hierdurch einerseits Ungenauigkeiten in der tatsächlichen Länge der freien Drahtenden, welche durch das frühzeitige Abisolieren nicht mehr ohne weiteres, d.h. ohne ein erneutes Abisolieren korrigiert werden kann. Außerdem besteht ein erhöhtes Risiko einer Rückverschmutzung der Kupferoberfläche während des Durchlaufens der Prozesskette bis zur Kontaktierung der Drahtenden.

Die Aufgabe der Erfindung besteht darin, ein Verfahren vorzusehen, das die vorstehenden Nachteile beseitigt und zudem einen vereinfachten Prozessablauf zum genauen Abisolieren der Drahtenden bereitstellt.

Zur Lösung der Aufgabe ist das Verfahren nach Anspruch 1 vorgesehen. Ausgestaltungen ergeben sich nach den abhängigen Ansprüchen.

Für ein Verfahren zum Abisolieren von Drahtenden einer Wellenwicklung, sind erfindungsgemäß die folgenden Verfahrensschritte vorgesehen: Wickeln einer Wellenwicklung aus parallel verlaufenden, isolierten Einzeldrähten auf einer flachen Wickelschablone um eine Wickelachse, Überführung der so gewickelten Wellenwicklung in ein Linearmagazin, Bewegen des Linearmagazins in eine Förderrichtung, soweit bis die offenen Drahtenden innerhalb eines jeweiligen Prozessfensters zum Liegen kommen; und Entfernen einer Isolation der Einzeldrähte im Bereich der seitlich aus dem Linearmagazin herausstehenden Drahtenden.

Dadurch, dass die Isolation an den offenen Drahtenden der Einzeldrähte entfernt wird, wobei die Drahtenden seitlich über die Wickelschablone bzw. das Linearmagazin überstehen ergibt sich der Vorteil, dass die Drahtenden gut zugänglich sind. Es finden sich keine störenden Überlappungen der Drahtenden, wie es beispielsweise im eingezogenen Zustand der Fall wäre. Außerdem können etwaige Rückstände der Isolation einfach entfernt werden, sodass eine Kontamination der Wellenwicklung mit Isolationsrückständen wirksam vermieden wird. Da die offenen Drahtenden der Einzeldrähte seitlich über die Wickelschablone überstehen, ist es ebenfalls denkbar, dass das Entfernen der Isolation dann stattfindet, wenn die Wellenwicklung noch auf der Wickelschablone aufgezogen ist. Dies kann beispielsweise während des Wickelns oder unmittelbar nach Fertigstellung der Wellenwicklung auf der Wickelschablone der Fall sein.

Gemäß einer Weiterbildung des Verfahrens ergibt sich, dass das Entfernen der Isolation mittels Laserablation innerhalb eines Prozessfensters stattfindet. Hierbei ist das Prozessfenster ein räumlicher Bereich, innerhalb dessen die Isolation entfernt werden kann. Für das Entfernen der Isolation kann auch mehr als ein Prozessfenster vorgesehen sein. Wellenwicklungen sind längliche Wickelmatten und es besteht die Möglichkeit, dass alle offenen Drahtenden bezogen auf eine Längsachse der Wickelmatte an einem Ende angeordnet sind. Gleichermaßen können die offenen Drahtenden an beiden Enden der Wickelmatte angeordnet sein. In diesem Fall können zwei Prozessfenster vorgesehen sein, innerhalb derer die Isolation entfernt wird. Laserablation bietet sich bevorzugt an, da das Entfernungswerkzeug (die Laseroptik) im Wesentlichen verschleißfrei funktioniert und der Energieeintrag optimal auf die zu entfernende Isolation eingestellt werden kann, sodass eine Beeinträchtigung des eigentlichen Drahtes, der abzuisolieren ist, weitestgehend vermieden werden kann.

Für den Fall, dass mehrere Prozessfenster für die Entfernung der Isolation vorgesehen sind, können entweder entsprechend mehrere Vorrichtungen zum Entfernen der Isolation vorgesehen sein, oder die Prozessfenster bzw. die Vorrichtungen sind entsprechend bewegbar, sodass mit einer Vorrichtung mehrere Prozessfenster bedient werden können.

Dementsprechend ist nach einer Ausgestaltung des Verfahrens vorgesehen, dass während des Entfernens der Isolation eine Relativbewegung zwischen einem Strahlungsaustritt einer Laserquelle und der Wellenwicklung stattfindet. Hierbei kann der Strahlungsaustritt der Laserquelle in Bezug auf die Wellenwicklung bewegbar sein und/oder die Wellenwicklung in Bezug auf den Strahlungsaustritt der Laserquelle bewegbar sein. In einer bevorzugten Weiterbildung kann vorgesehen sein, dass der Strahlungsaustritt der Laserquelle um die seitlich überstehenden Drahtenden herum bewegt wird.

Dementsprechend ergibt sich aus einer Weiterbildung ergibt, dass ein Bewegen des Strahlungsaustritts axial zu einer Längsachse der Wellenwicklung vorgesehen ist. In einer vorteilhaften Ausgestaltung ist die Relativbewegung parallel zur Längsachse der Wellenwicklung, wobei der Strahlungsaustritt der Laserquelle mit einem Abstand zu einer Mittellinie der Wellenwicklung angeordnet sein kann. Ebenfalls kann in einer vorteilhaften Ausgestaltung vorgesehen sein, dass der Strahlungsaustritt der Laserquelle und/oder die Wellenwicklung in mehreren Freiheitsgraden zueinander bewegbar sind.

Es kann außerdem vorgesehen sein, dass der Einfallswinkel der aus dem Strahlungsaustritt austretenden und auf den Drahtenden innerhalb des Prozessfensters auftreffenden Strahlung während des Abisolierens variiert. In einer bevorzugten Ausführungsform beträgt der Einfallswinkel 45°. Dies kann vorzugsweise durch einen um eine Rotationsache drehbaren Strahlungsaustritt erfolgen.

Erfindungsgemäß ist vorgesehen, dass vor dem Entfernen der Isolation ein Überführen der Wellenwicklung von der Wickelschablone in ein Linearmagazin vorgesehen ist. Durch das Vorsehen eines Linearmagazins wird vorteilhaft eine definierte Lage der Wellenwicklung und insbesondere der Drahtenden erreicht. Die Prozessfenster lassen sich hinsichtlich ihrer Lage vorzugsweise in Bezug auf das Linearmagazin definieren, wodurch der Prozessablauf vereinfacht wird. Falls ein Linearmagazin verwendet wird, dann kann die vorstehend beschriebene Relativbewegung durch die Förderbewegung des Linearmagazins bei dessen Befüllung bzw. durch die Bewegung eines Befüllungswerkzeugs für das Linearmagazin stattfinden.

Aus einer Weiterbildung der Erfindung ergibt sich, dass vor dem Entfernen der Isolation ein Fügen der Wellenwicklung zu einer komplexen Wickelmatte innerhalb des Linearmagazins vorgesehen ist. Eine komplexen Wickelmatte kann durch mehrere Wellenwicklungen, welche in das Linearmagazin übereinander oder ineinander verflochten eingelegt werden, erzeugt werden.

Gemäß einer Ausgestaltung des Verfahrens kann vorgesehen sein, dass vor oder nach dem Entfernen der Isolierung eine Formgebung der Wellenwicklung oder der Wickelmatte vorgesehen ist. Durch einen weiteren Prozessschritt, in dem eine Formgebung der Wickelmatte, etwa durch Pressen oder Rollen, stattfindet, wird die Höhe der Wickelmatte egalisiert, wodurch der Einbau der Wickelmatte oder der Wellenwicklung in einen Rotorkörper, Statorkörper oder die Überführung in ein Einziehwerkzeug erleichtert wird. Dies gestaltet sich auch vorteilhaft für den Fall, dass die Isolierung noch zu entfernen ist, denn durch die Formgebung nehmen auch die Drahtenden eine definierte Position, vorzugsweise innerhalb des oder der Prozessfenster, ein.

Entsprechend den vorstehenden Ausführungen gestaltet es sich vorteilhaft, dass in einer optionalen Weiterbildung des Verfahrens vorgesehen ist, dass nach dem Entfernen der Isolierung eine Überführung der Wellenwicklung oder der Wickelmatte in einen Rotorkörper oder einen Statorkörper oder ein Einziehwerkzeug vorgesehen ist.

Schließlich kann weiterbildend kann vorgesehen sein, dass vor oder nach dem Entfernen der Isolierung ein Kürzen der Drahtenden vorgesehen ist. Auf diese Weise können die Drahtenden auf die gewünschte Einbausituation konfektioniert werden, ohne, dass die oben beschriebenen Nachteile auch für die Drahtabschnitte auftreten.

Weitere Merkmale, Details und Vorteile der Erfindung ergeben sich aus dem Wortlaut der Ansprüche sowie aus der folgenden Beschreibung Ausführungsbeispielen basierend auf den Zeichnungen.

In den Figuren zeigen:
- Fig. 1:: eine schematische Darstellung einer in ein Linearmagazin eingelegten Wickelmatte; und
- Fig. 2:: eine schematische Darstellung der Relativbewegung einer Laseroptik in Bezug auf die Drahtenden in einer Schnittansicht.

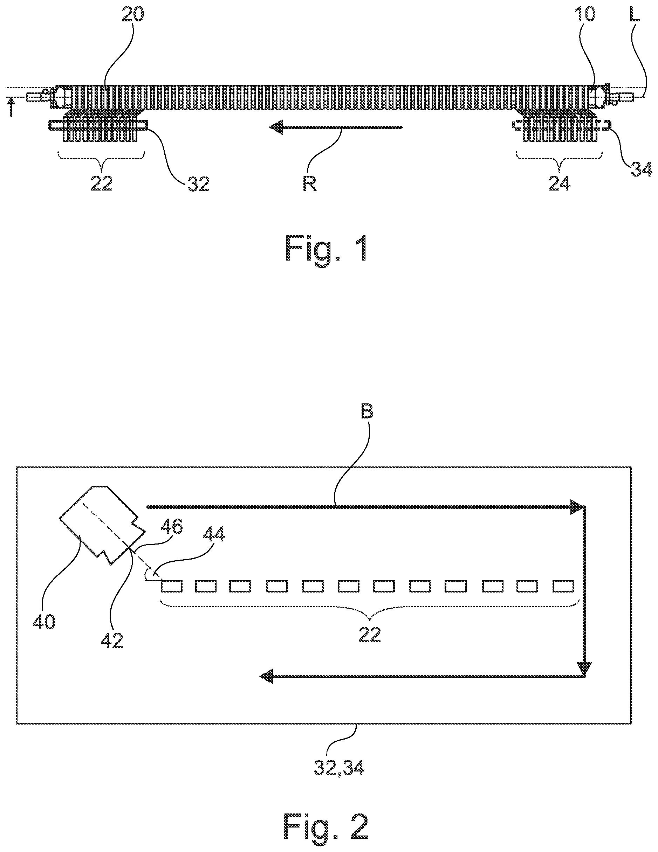

Figur 1 zeigt eine Ausführungsform des Verfahrens, wonach eine Isolation von Drahtenden 22, 24 einer in ein Linearmagazin 10 eingelegten Wellenwicklung 20 in einem ersten Prozessfenster 32 und in einem zweiten Prozessfenster 34 entfernt werden kann.

Das Linearmagazin 10 wird in einer Förderrichtung R, welche parallel zu einer Längsachse L der Wellenwicklung verläuft, bewegt. Man erkennt, dass die Drahtenden 22, 24 seitlich aus dem Linearmagazin 10 heraus ragen. Die Drahtenden 22, 24 werden durch die Bewegung des Linearmagazins 10 in der Förderrichtung R in einen Bereich gebracht, in dem das jeweilige Prozessfenster 32, 34 liegt. Die Wellenwicklung 20 ist in diesem Ausführungsbeispiel so hergestellt worden, dass, auf die Längsrichtung der Wellenwicklung 20 bezogen, an beiden Enden der Wellenwicklung 20 die Drahtenden 22, 24 seitlich abstehen.

Figur 2 zeigt in einer Seitenansicht, wie ein Strahlungsaustritt 42 einer Laserquelle 40 bzw. eine Laseroptik in Bezug auf die Drahtenden 22 in einem der Prozessfenster 32, 34 bewegt wird. Der Strahlungsaustritt 42 weist einen Anstellwinkel auf, sodass der Laserstrahl 46 mit einem Einfallswinkel 44 auf das jeweilige abzuisolierende Drahtende auftrifft. Durch den in Figur 2 dargestellten Bewegungspfad B der Laserquelle 40 bzw. des Strahlungsaustritts 42 ergibt sich, dass mittels der Laserquelle 40 bzw. des Strahlungsaustritts 42 eine Ablation der Isolation der Drahtenden 22 im Querschnitt rundum erfolgen kann. Es versteht sich, dass der Einfallswinkel 44 durch eine Verstellung der Laserquelle 40 bzw. des Strahlungsaustritts 42 oder durch eine Rotation der Laserquelle 40 selbst einstellbar ist.

Sämtliche Merkmale und Vorteile, die sich aus den Ansprüchen, der Beschreibung und der Zeichnung ergeben, einschließlich konstruktiver Einzelheiten, räumlicher Anordnungen und Verfahrensschritten, können sowohl allein als auch in verschiedenen Kombinationen für die Erfindung wesentlich sein.

### Bezugszeichenliste

- 10: Linearmagazin

- 20: Wellenwicklung
- 22, 24: Drahtenden

- 32, 34: Prozessfenster

- 40: Laserquelle
- 42: Strahlungsaustritt
- 44: Einfallswinkel
- 46: Laserstrahl

- B: Bewegungspfad
- L: Längsachse
- R: Förderrichtung

## Patentansprüche

1. Verfahren zum Abisolieren von Drahtenden (22) einer Wellenwicklung (20), aufweisend die Verfahrensschritte:
- Wickeln einer Wellenwicklung (20) aus parallel verlaufenden, isolierten Einzeldrähten auf einer flachen Wickelschablone (100) um eine Wickelachse, wobei offene Drahtenden (22) der Einzeldrähte seitlich über die Wickelschablone überstehen;
**GEKENNZEICHNET, DURCH** nachfolgende Verfahrensschritte:
- Überführung der so gewickelten Wellenwicklung (20) in ein Linearmagazin (10);
- Bewegen des Linearmagazins (10) in eine Förderrichtung (R), soweit bis die offenen Drahtenden (22) innerhalb eines jeweiligen Prozessfensters (32, 34) zum Liegen kommen; und
- Entfernen einer Isolation der seitlich aus dem Linearmagazin herausstehenden Drahtenden (22).

2. Verfahren nach Anspruch 1, wobei das Entfernen der Isolation mittels Laserablation innerhalb eines Prozessfensters (32, 34) stattfindet.

3. Verfahren nach Anspruch 2, wobei während des Entfernens der Isolation eine Relativbewegung zwischen einem Strahlungsaustritt (42) einer Laserquelle (40) und der Wellenwicklung (20) stattfindet.

4. Verfahren nach Anspruch 3, wobei ein Bewegen des Strahlungsaustritts (42) axial zu einer Längsachse (L) der Wellenwicklung (20) vorgesehen ist.

5. Verfahren nach einem Ansprüche 2 bis 3, wobei der Einfallswinkel (44) der aus dem Strahlungsaustritt (42) austretenden und auf den Drahtenden (22) innerhalb des Prozessfensters (32, 34) auftreffenden Strahlung während des Abisolierens variiert.

6. Verfahren nach einem der vorherigen Ansprüche , wobei vor dem Entfernen der Isolation ein Fügen der Wellenwicklung (20) zu einer komplexen Wickelmatte innerhalb des Linearmagazins (10) vorgesehen ist.

7. Verfahren nach einem der vorhergehenden Ansprüche, wobei vor oder nach dem Entfernen der Isolierung eine Formgebung der Wellenwicklung (20) oder der Wickelmatte vorgesehen ist.

8. Verfahren nach einem der vorhergehenden Ansprüche, wobei nach dem Entfernen der Isolierung eine Überführung der Wellenwicklung (20) oder der Wickelmatte in einen Rotorkörper oder einen Statorkörper oder ein Einziehwerkzeug vorgesehen ist.

9. Verfahren nach einem der vorhergehenden Ansprüche, wobei vor oder nach dem Entfernen der Isolierung ein Kürzen der Drahtenden (22) vorgesehen ist.

## Claims

1. A method for stripping wire ends (22) of a wave winding (20), having the following method steps:
- winding a wave winding (20) from parallel, insulated individual wires onto a flat former (100) about a winding axis, with open ends (22) of the individual wires laterally protruding over the former;
**CHARACTERISED BY** the following method steps:
- transferring the wound wave winding (20) into a linear magazine (10);
- moving the linear magazine (10) in a conveying direction (R) until the open wire ends (22) come to rest within a respective process window (32, 34); and
- removing any insulation from the wire ends (22) protruding from the side of the linear magazine.

2. The method according to claim 1, wherein the removal of the insulation takes place by means of laser ablation within a process window (32, 34).

3. The method according to claim 2, wherein during the removal of the insulation, a relative movement takes place between a radiation outlet (42) of a laser source (40) and the wave winding (20).

4. The method according to claim 3, wherein the radiation outlet (42) is moved axially to a longitudinal axis (L) of the wave winding (20).

5. The method according to claim 2 to 3, wherein the angle of incidence (44) of the radiation emanating from the radiation outlet (42) and impinging on the wire ends (22) within the process window (32, 34) is varied during stripping.

6. The method according to any one of the preceding claims, wherein, before the removal of the insulation, the wave winding (20) is joined to form a complex winding mat within the linear magazine (10).

7. The method according to any one of the preceding claims, wherein, before or after the removal of the insulation, the wave winding (20) or the winding mat is shaped.

8. The method according to any one of the preceding claims, wherein, after the removal of the insulation, the wave winding (20) or the winding mat is transferred into a rotor body or a stator body or a drawing-in tool.

9. The method according to any one of the preceding claims, wherein, before or after the removal of the insulation, the wire ends (22) are shortened.

## Revendications

1. Procédé de dénudage d'extrémités de fils (22) d'un enroulement ondulé (20), présentant les étapes de procédé :
- enroulement d'un enroulement ondulé (20) de fils individuels s'étendant parallèles et isolés sur un gabarit d'enroulement plat (100) autour d'un axe d'enroulement, dans lequel les extrémités de fils (22) ouvertes des fils individuels dépassent latéralement du gabarit d'enroulement ;
**CARACTÉRISÉ PAR** les étapes de procédé suivantes :
- transfert de l'enroulement ondulé (20) ainsi enroulé dans un magasin linéaire (10) ;
- déplacement du magasin linéaire (10) dans une direction de transport (R) jusqu'à ce que les extrémités de fils (22) ouvertes se stabilisent au sein d'une fenêtre de processus (32, 34) respective ; et
- retrait de l'isolation des extrémités de fils (22) qui dépassent latéralement du magasin linéaire.

2. Procédé selon la revendication 1, dans lequel le retrait de l'isolation est effectué au moyen d'une ablation laser dans une fenêtre de processus (32, 34).

3. Procédé selon la revendication 2, dans lequel, lors du retrait de l'isolation, un mouvement relatif est effectué entre une sortie de rayonnement (42) d'une source laser (40) et l'enroulement ondulé (20).

4. Procédé selon la revendication 3, dans lequel un déplacement de la sortie de rayonnement (42) est prévu axialement vers un axe longitudinal (L) de l'enroulement ondulé (20).

5. Procédé selon une des revendications 2 à 3, dans lequel l'angle d'incidence (44) du rayonnement sortant de la sortie de rayonnement (42) et frappant les extrémités de fils (22) dans la fenêtre de processus (32, 34) est modifié pendant le dénudage.

6. Procédé selon l'une quelconque des revendications précédentes, dans lequel, avant le retrait de l'isolation, une jonction de l'enroulement ondulé (20) est prévue pour former un tapis d'enroulement complexe dans le magasin linéaire (10).

7. Procédé selon l'une quelconque des revendications précédentes, dans lequel une mise en forme de l'enroulement ondulé (20) ou du tapis d'enroulement est prévue avant ou après le retrait de l'isolation.

8. Procédé selon l'une quelconque des revendications précédentes, dans lequel, après le retrait de l'isolation, un transfert de l'enroulement ondulé (20) ou du tapis d'enroulement dans un corps de rotor ou un corps de stator ou un outil d'insertion est prévu.

9. Procédé selon l'une quelconque des revendications précédentes, dans lequel un raccourcissement des extrémités de fils (22) est prévu avant ou après le retrait de l'isolation.
